# EUROPEAN PATENT APPLICATION

(11) **EP 1 788 493 A1**
(43) Date of publication of application: **23.05.2007**
(21) Application number: 05292464.4
(22) Date of filing: 21.11.2005
(51) Int. Cl.: G06F 17/30

(54) **Detecting changes in data**

(71) Applicant: SAP AG, 69190 Walldorf (DE)
(72) Inventor: Fischer, Uwe, 76199 Karlsruhe (DE); Deshpande, Paresh, Viveknagar Post Bangalore 560 042 (IN); Jatheendran, Biju, Bangalore 560 008 (IN); Ficatier, Olivier, 06200 Nice (FR); Haury, Axel, 06110 Le Cannet (FR); Suchanek, Alexandra, 76532 Baden Baden (DE)
(74) Representative: Walter, Philipe

(57) **Abstract**

Detecting concurrent changes in data includes storing a first version of data and first metadata corresponding thereto, receiving a second version of data and second metadata corresponding thereto, and determining whether the first version of data is the same as the second version of data using the first and second metadata. If the first version of data is not the same as the second version, a concurrency resolution process is initiated to resolve inconsistencies in data between the first version and the second version. The concurrency resolution process produces consolidated changes based on the first version and the second version.

## Description

### TECHNICAL FIELD

This patent application relates, in general, to detecting changes in distributed data.

### BACKGROUND

A single entity, such as a company, may include multiple data management systems. For example, there may be a customer relationship management (CRM) system, a marketing system, and master system. These data management systems may each contain copies of the same data (e.g., the data is distributed). For example, each data management system may contain a customer record, which includes information such as a customer's name, address, telephone number, social security number, and the like. Changes to information in one data management system may need to be propagated to other data management systems in order to ensure that the data in all systems is consistent. Problems may arise, however, if two systems are trying to update the same data concurrently. Problems may also arise if that data has been updated previously and the updates have not yet been propagated to the system or systems currently trying to update the data.

### SUMMARY

This patent application describes methods and apparatus, including computer program products, for detecting concurrent changes in distributed data.

In general, in one aspect, the invention is directed to detecting concurrent changes in data. This aspect includes storing a first version of data and first metadata corresponding thereto, receiving a second version of data and second metadata corresponding thereto, and determining whether the first version of data is the same as the second version of the data using the first and second metadata. If the first version is not the same as the second version, this aspect further includes initiating a concurrency resolution process to resolve inconsistencies in data between the first version and the second version. The concurrency resolution process produces consolidated changes based on the first version and the second version. This aspect may also include one or more of the following features.

The consolidated changes may be incorporated into master data. The master data may be posted with the consolidated changes. The first version of data and the first metadata may include a pending change to the master data. The first version of data and the first metadata may be received before receiving the second version of data and the second metadata. The first version of data and the first metadata may be received from a first source and the second version of data and the second metadata may be received from a second source. The first source may be different from, or the same as, the second source. For example, the first source may include a client and the second source may include a server that is programmed to detect concurrent changes in data.

The second version of data and the second metadata may be stored in a staging area. The first version of data and the first metadata may be stored in the staging area. At least one of the first metadata and the second metadata may include a global unique identifier or a time-stamp. The first metadata and the second metadata may identify an original version of the data upon which both first version and the second version are based. At least one of the first and second metadata may identify data to be changed, a version of the data upon which a change is based, and a version of the data that the change produces. For example, the first metadata may identify data to be changed by a client, a version of the data on the client upon which a change is based, and a version of the data on the client that the change produces. In another example, the second metadata may identify data to be changed by a server, a version of the data on the server upon which a change is based, and a version of the data on the server that the change produces.

The details of one or more examples are set forth in the accompanying drawings and the description below. Further features, aspects, and advantages of the invention will become apparent from the description, the drawings, and the claims.

### DESCRIPTION OF THE DRAWINGS

Fig. 1 is a block diagram of a computer system on which the data change detection processes described herein may be implemented.
Fig. 2 is a flowchart of a process for detecting concurrent changes to server data that are attempted by two clients of the server.
Fig. 3 is a flowchart of a process for detecting changes to server data that has already been changed prior to the attempted changes.
Fig. 4 is a flowchart of a process for detecting separate changes to server data that are attempted by a single client of the server.
Fig. 5 is a flowchart of a process for detecting changes to server data that are attempted by the server and, possibly, a client.

Like reference numerals in different figures indicate like elements.

### DETAILED DESCRIPTION

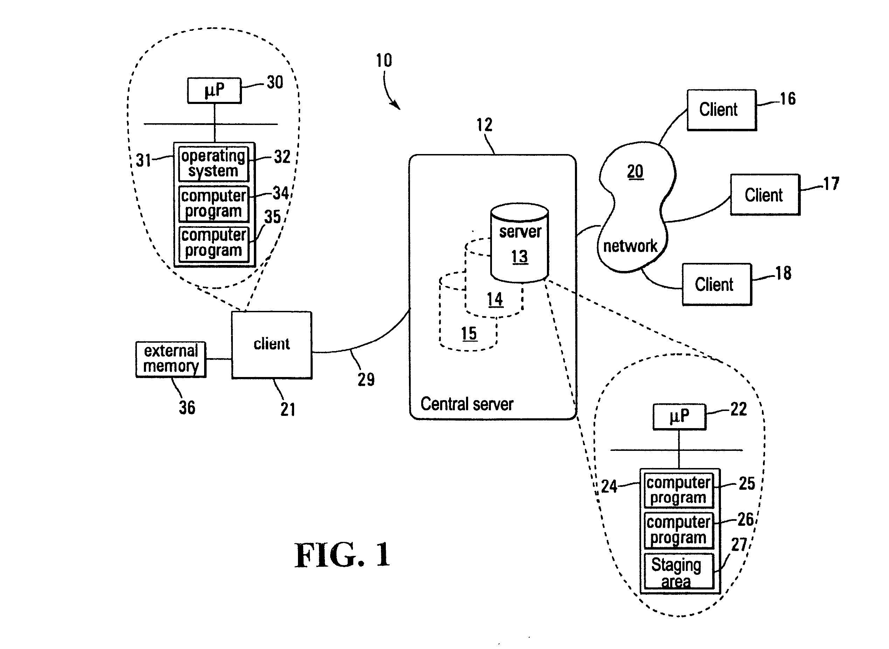

Fig. 1 shows an example of a computer system 10, on which the change detection processes described herein may be implemented. In this regard, it is noted that the change detection processes are described below in the context of master data in a central server. The change detection processes, however, are not limited to this particular use or implementation. As noted below, the change detection process may be used in the context of any process (e.g., computer program) to detect changes in any type of data.

According to embodiments, the computer program product may comprise instructions which, when executed, cause the one or more machines to incorporate the consolidated changes into master data; and post the master data with the consolidated changes. The first version of data and the first metadata may comprise a pending change to the master data in a computer program product according to embodiments. The computer program product may further comprise instructions which, when executed, cause the one or more machines to receive the first version of data and the first metadata before receiving the second version of data and the second metadata, the first version of data and the first metadata being received from a first source and the second version of data and the second metadata being received from a second source, the first source being different from the second source. The first version of data and the first metadata may be received from a first source and the second version of data and the second metadata may be received from a second source, the first source being different from the second source according to embodiments of the computer program product. The first version of data and the first metadata may be received from a first source and the second version of data and the second metadata may be received from a second source, the first source being same as the second source according to embodiments of the computer program product. The first version of data and the first metadata may be received via a first source and the second version of data and the second metadata may be received via a second source, the first source comprising a client and the second source comprising a server on which detecting changes is performed according to embodiments of the computer program product. The first metadata and the second metadata may identify an original version of the data upon which both first version and the second version are based according to embodiments of the computer program product. At least one of the first and second metadata may identify data to be changed, a version of the data upon which a change is based, and a version of the data that the change produces according to embodiments of the computer program product. The first metadata may identify data to be changed by a client, a version of the data on the client upon which a change is based, and a version of the data on the client that the change produces, and the second metadata may identify data to be changed by a server, a version of the data on the server upon which a change is based, and a version of the data on the server that the change produces according to embodiments of the computer program product.

Referring to Fig. 1, computer system 10 includes a central server 12. Central server 12 may include one or more devices, such as one or more servers 13 to 15, which store a library of data objects. These data objects constitute master data and are accessible to one or more clients, which are described below. In this context, master data is information that is common to different locations and/or processes in a system landscape. Master data thus can be referenced by multiple systems and/or applications in a system landscape, such as, e.g., a product lifecycle management system, a customer relationship management system, a supply chain management system, and a manufacturing system, even if these systems are executed at different data processing systems in the landscape.

Master data is stored here as data objects. Generally, a data object is a collection of information that is grouped together and treated as a primitive in a data processing environment. A data object is generally free of internal references and information stored in a data object can be changed without concomitant changes to the data processing instructions that handle the data object. The information in a data object can be stored in a contiguous block of computer memory of a specific size at a specific location.

The master data may be relevant to data processing activities at the different data processing devices. For example, master data may be relevant to data processing activities, such as interaction with a user, at a client and to data processing activities, such as application software, at server 12. Master data may also be relevant to multiple applications at individual data processing devices.

As a consequence of this widespread relevance of master data collections, multiple, corresponding versions of the collections of master data may be stored individually at different data processing devices in computer system 10. Corresponding versions of the master data collections include at least some identical information and are maintained by master data management processes to ensure that this information remains harmonized at the different locations. However, the corresponding versions of the master data collections need not be identical. For example, a collection at one data processing device can be redacted based on the data processing activities commonly performed at that device or based on the data access rights that have been granted to users at that device.

Central server 12 may include one server 13 or multiple servers 13 to 15 (servers 14 and 15 are depicted using dashed lines to indicate that they are optional). In the case of multiple servers, server 13 may act as a controller or "load balancer" for the remaining servers 14 and 15. In this role, server 13 may route data, requests, and instructions between an "external device" (e.g., a client 16) and a "slave" server, such as server 14. For example, server 13 may store objects locally until it is full, then route data to a server, such as server 14. For the purposes of the following description, such internal communications between server 13 and the slave servers will be assumed.

Server 13 may be any type of processing device that is capable of receiving and storing data, and of communicating with its clients. As shown in Fig. 1, server 13 includes one or more processors 22 and memory 24 that stores computer programs that are executed by processor(s) 22. In this regard, memory 24 stores a computer program 25 for communicating with its clients, e.g., to receive a data update from a client, and to post data updates for use by clients 16, 17, 18, and/or 21. Memory 24 also contains a computer program 26 for use in storing data objects (e.g., master data) in central server 12, and may also contain staging area 27 to store, temporarily, updates to master data while a change detection process is performed on the data. It is noted that staging area 27 may be external to server 13 even though it is depicted as internal to server 13. The updates may include information identifying their source, e.g., client 16, 17, etc. Computer program 26 may also implement a change detection process that includes, among other things, determining if two devices are trying to make concurrent changes to the same master data at server 12.

Client 21 may also be any type of processing device, such as a desktop computer, mainframe computer, or the like, that is capable of obtaining data objects and of transmitting those data objects to central server 12. A high-speed data link 29, such as Ethernet, may connect client 21 to server 12 in central server 12. The connection may be local or remote. That is, client 21 may also access central server 12 via network 20.

As shown in Fig. 1, client 21 includes one or more processor(s) 30 and memory 31 that stores computer programs that are executed by processor(s) 30. In this regard, memory 31 stores an operating system 32, a computer program 34 that enables communication between client 21 and server 12, and a computer program 35 for use with a change detection process that includes, among other things, determining if two devices are trying to make concurrent changes to the same master data at server 12. Complete copies of data objects (i.e., master data) that are stored in central server 12 may also be stored on client 21 and on each of clients 16 to 18. Furthermore, each client 16 to 18 may have a hardware/software configuration that is the same as, or different than, client 21.

In this regard, clients 16 to 18 and 21 may be computers or any other data processing apparatus including, but not limited to, desktop or laptop computers, personal digital assistants ("PDAs"), and mobile telephones. Network 20 provides a communication link between central server 12 and clients 16 to 18. Network 20 may include, but is not limited to, a local area network ("LAN"), a wide area network ("WAN"), the Internet, and/or a wireless link (e.g., a wireless fidelity, or "Wi-Fi", link).

Each data object in system 10 may have associated metadata that contains one or more identifiers for the data object. In particular, the metadata identifies the current version of the master data from client 21 (hereinafter, "the client master data") and the original version of the master data upon which the client master data is based (hereinafter, "the original master data"). For example, the client master data may be an altered version of the original master data. The metadata may define one or more tokens (described below), which identify the client master data and the original master data.

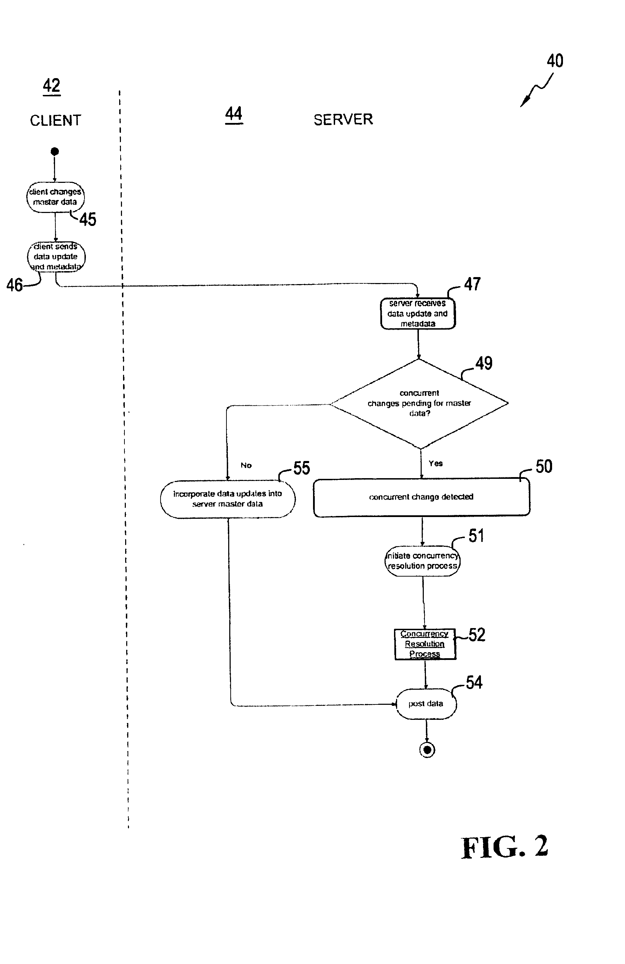

Fig. 2 shows a process 40 that detects whether two devices (e.g., clients 16 and 21) are attempting to change the master data in central server 12. Process 40 includes two stages 42 and 44. Stage 42 is performed on a client, such as client 21, and stage 44 is performed on central server 12. Stage 42 may be implemented by computer program 35. Stage 44 may be implemented by computer program 26.

In stage 42, client 21 modifies (45) its copy of master data. For example, client 21 may modify a telephone number that is stored in a data object on client 21. Thereafter, client 21 sends (46) a data update to central server 12. The data update may include only the changes made to the data objects on the client, an entire copy of each data object that has been changed, the entire set of master data on the client, or some combination thereof. Along with the data update, client 21 sends metadata to central server 12. The metadata is associated with the data update and contains one or more identifiers for the data update. In this case, the metadata identifies the current version of master data from client 21 and the original master data upon which the client master data is based. For example, the metadata may define one or more tokens that identify the client master data as version "B" and the original server master data as version "A". The tokens may be any type of unique identifier, such as a time-stamp, a version identifier, or a global unique identifier (GUID). Each of the tokens may be associated with a unique system identifier that identifies a system (e.g., a computer system) in which the corresponding version is valid. The unique system identifier may correspond to a technical or business-related identifier.

In addition, the metadata identifies data (e.g., object(s)) that is subject to change. For example, the data that is subject to change may be identified by memory address(es), object identifier(s), and/or other attributes that may be part of the metadata. In one example, the version (VersionID) and system (SystemID) are identified by the following data pattern: "VersionID" (SystemID), e.g., "A"(Server 12) and "B"(Client 21).

Server 12 receives (47) the data update and metadata from client 21. Server 12 determines (49) whether there are any concurrent changes pending for the master data stored on server 12 (hereinafter, "the server master data").
More specifically, when server 12 receives a data update and associated metadata, server 12 stores the data update and associated metadata in staging area 27. Server 12 also switches on a pending flag (e.g., one or more bits) to indicate that a change to the server master data is pending, i.e., a case where the server is aware of the change but has not yet applied the change to its master data.

If a change is pending from another client, in which case the pending flag is on, server 12 compares the metadata for the data update from client 21 with the metadata for a pending data update from, e.g., another client 16. If the metadata from both data updates indicates that the two data updates affect the same piece of data, server 12 detects (50) a concurrent change to the server master data. For example, server 12 may have stored, in staging area 27, a data update from client 16 along with metadata identifying the data update as a version "C"(Client 16) of original master data version "A"(Server 12). Server 12 may receive, from client 21, a data update with metadata identifying the data update as a version "B"(Client 21) of original master data "A"(Server 12). Using this metadata, server 12 is able to ascertain that both clients 16 and 21 are attempting to change the server master data, i.e., to make a concurrent change without knowing about each others' changes. The concurrent change is indicated by the same base version "A"(Server 12) for both changes with different resulting versions "B"(Client 21) and "C"(Client 16) from different systems.

When a concurrent change is detected, server 12 initiates (51) a concurrency resolution process to resolve any conflicts between the version "C"(Client 16) master data from client 16 and the version "B"(Client 21) master data from client 21 before updating the server master data (version "A"(Server 12)). The concurrency resolution process may be configured to identify, and to resolve, any inconsistencies between versions "B"(Client 21) and "C"(Client 16). Any type of concurrency resolution process may be used, including interactive and non-interactive processes.

In one implementation, the concurrency resolution process 52 consolidates the changes (from clients 16 and 21) to be made to the server master data (version "A"(Server 12)) and makes the consolidated changes to the server master data. Server 12 thereafter posts (54) the resulting updated data. The posted data may then be propagated to, or accessed by, the remaining clients of server 12.

Referring back to block 49, if the pending flag is not on, or if pending changes from client 16 do not address the same piece of data as the pending changes from client 21 (which is determined based on the metadata associated with the corresponding data updates), server 12 need not initiate the concurrency resolution process. Instead, server 12 simply incorporates (55) the data updates into the server master data and posts (54) the resulting updated data. As before, the posted data may be propagated to, or accessed by, the remaining clients of server 12.

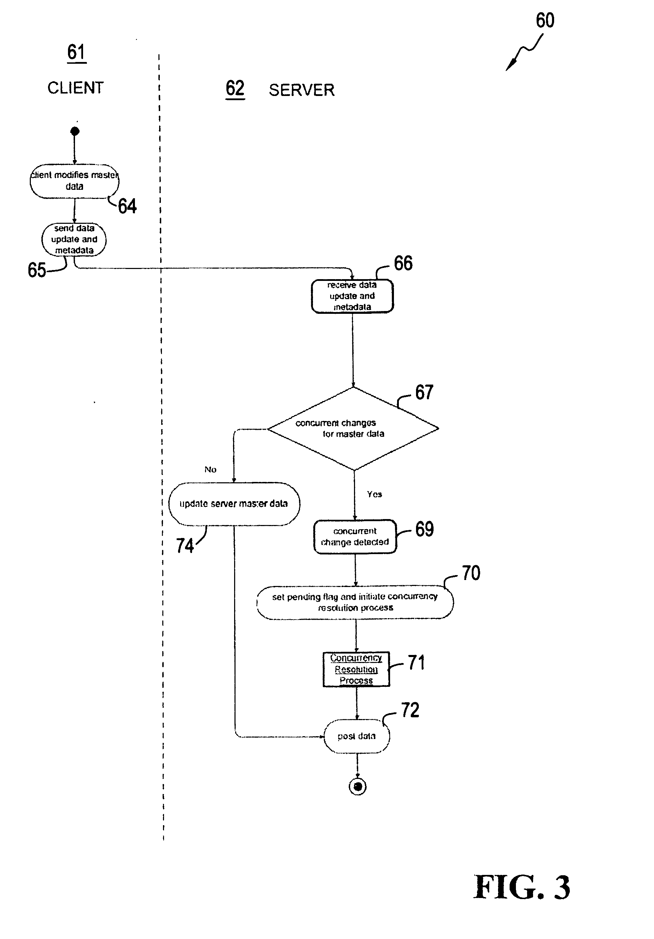

Fig. 3 shows a process 60 that detects a change that has already been made to the server master data when attempting a new change to the server master data. For example, assume that the server master data and the client master data were originally the same and defined as version "A"(Server 12). At some point, the server master data was changed, resulting in a version "C"(Server 12). The client thereafter sends, to server 12, a data update that is identified by its metadata as version "B"(Client 21), based on version "A" (Server 12), i.e., without incorporating changes made in the server leading to version "C"(Server 12) . Process 60 is used to detect that the server master data was changed before implementing the version "B"(Client 21) data update from the client.

As was the case above, process 60 includes two stages 61 and 62. Stage 61 is performed on a client, such as client 21, and stage 62 is performed on central server 12. Stage 61 may be implemented by computer program 35. Stage 62 may be implemented by computer program 26.

In stage 61, client 21 modifies (64) its copy of master data. For example, client 21 may modify the telephone number of a client that is stored in a data object on client 21. Thereafter, client 21 sends (65) a data update to central server 12. As was the case above, the data update may include only the changes made to the data objects on client, an entire copy of each data object that has been changed, the entire set of master data on client 21, or some combination thereof. Along with the data update, client 21 sends metadata to central server 12. As explained above, the metadata is associated with the data update and contains one or more identifiers for the data update. The metadata identifies the client master data on client 21 (the client master data) and the original master data upon which the client master data is based. For example, the metadata may define one or more tokens that identify the client master data as version "B"(Client 21) and the original master data as version "A" (Server 12), where, as above, the parentheticals identify the source of the version (i.e., where the version is valid) and also the data to be changed.

Server 12 receives (66) the data update and metadata from client 21. Server 12 determines (67) whether there have been any previous changes to the server master data. When server 12 receives a data update and associated metadata, server 12 stores the data update and associated metadata in staging area 27. Server 12 also compares the metadata associated with the data update to the metadata stored with the server master data. In particular, server 12 identifies the original master data (e.g., version "A"(Server 12)) from the metadata from client 21 and from the metadata stored with the server master data. Server 12 thus knows the baseline of the master data, meaning the point from which the copies of the master data on client 21 and server 12 were changed. Server 12 also identifies the version of the data update from client 21 (e.g., version "B"(Server 12)) and the version of the data currently stored on server 12 (e.g., version "C"(Server 12)). Since current version "C"(Server 12) on the server is different from the baseline version "A"(Server 12), server 12 detects (69) a concurrent change.

In this regard, server 12 cannot apply the client update automatically (because the baseline has changed). Instead, server 12 turns-on the pending flag to indicate that a change to the server master data is pending, and initiates (70) a concurrency resolution process (71) to resolve any conflicts between the version "C"(Server 12) master data on server 12 and the version "B"(Client 21) master data from client 21. The concurrency resolution process may be configured to identify, and to resolve, any inconsistencies between versions "B"(Client 21) and "C"(Server 12) knowing the original version of the client and server master data (version "A"(Server 12)). Any concurrency resolution process may be used, including interactive and non-interactive processes.

As was the case above, the concurrency resolution process may consolidate the changes to be made to the server master data and makes the consolidated changes to the server master data. Server 12 thereafter posts (72) the resulting updated data. The posted data may then be propagated to, or accessed by, the remaining clients of server 12.

Referring back to block 67, if the master data on server 12 has not been changed, e.g., the master data on server 12 is currently version "A"(Server 12), which is the predecessor state to the client change to version "B"(Client 21), then server 12 incorporates (74) the data updates into the server master data and posts (72) the resulting updated data. The posted data may be propagated to, or accessed by, the remaining clients of server 12.

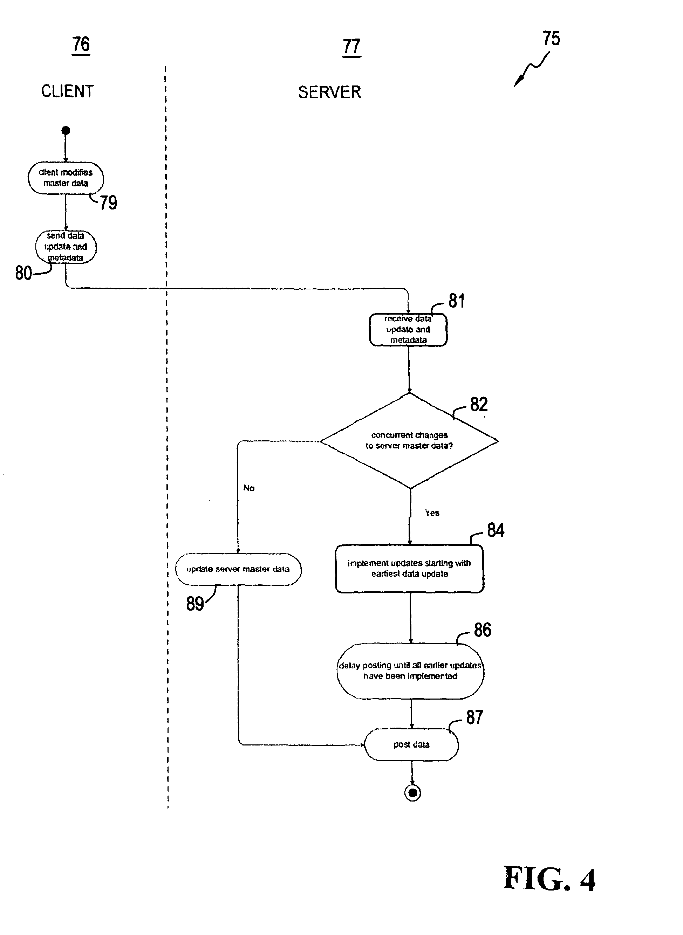

Fig. 4 shows a process 75 that detects whether the same device (e.g., client 16) is attempting to make successive or concurrent changes to the server master data stored in central server 12. Process 40 includes two stages 76 and 77. Stage 76 is performed on a client, such as client 21, and stage 77 is performed on central server 12. Stage 76 may be implemented by computer program 35. Stage 77 may be implemented by computer program 26.

In stage 76, client 21 modifies (79) its copy of master data. Thereafter, client 21 sends (80) a data update to central server 12. As above, the data update may include only the changes made to the data objects on client, an entire copy of each data object that has been changed, the entire set of master data on client 21, or some combination thereof. Along with the data update, client 21 sends metadata to central server 12. As explained above, the metadata is associated with the data update and contains one or more identifiers for the data update. The metadata identifies the client master data on client 21 (the client master data) and the original master data upon which the client master data is based. For example, the metadata may define a token that identifies the client master data as version "B"(Client 21) and the original master data as version "A"(Client 21), where, as above, the parentheticals identify the source of the version and also the data to be changed. As above, the tokens may be any type of identifier, such as a time-stamp, a version identifier, or a global unique identifier (GUID).

Server 12 receives (81) the data update and metadata from client 21. Server 12 determines (82) whether there are any concurrent changes pending for the server master data that is on server 12. More specifically, when server 12 receives a data update and associated metadata, server 12 stores the data update and associated metadata in staging area 27. Server 12 also switches on a pending flag (e.g., one or more bits) to indicate that a change to the server master data is pending. If two changes are pending from client 21, in which case the pending flag is on, server 12 compares the metadata for a first data update from client 21 with the metadata for a second data update from client 21. If the two changes address the same piece of data, the server 12 detects (84) a concurrent change to the server Taster data, meaning two different and as-yet unapplied changes by client 21.

For example, server may have stored, in staging area 27, a data update from client 21 along with metadata identifying the data update as a version "C"(Client 21) of original master data version "A"(Server 12). Server 12 may also have received, from client 21, a data update with metadata specifying a version "B"(Client 21) of original master data "A"(Server 12). With both changes based on the same version "A"(Server 12) but leading to different versions "B"(Client 21) and "C"(Client 21), server 12 is able to ascertain that there is a concurrent change being made to the server master data. The concurrent changes, in this case, were made by the same client 21.

In another example, server may have stored, in staging area 27, a data update from client 21 along with metadata identifying the data update as a version "C"(Client 21) of original master data version "A"(Server 12). Server 12 may also have received, from client 21, a data update with metadata specifying a version "B"(Client 21) of original master data "C"(Client 21). Since the server contains master data that is version "A"(Server), the data update should not be applied and, furthermore, server 12 is able to ascertain that there is a concurrent change being made to the server master data. The concurrent changes, in this case, was not caused by client 21 or other clients or the server. It may have been caused, e.g. by malfunctions in client 21, server 12 or communications between them. This results in a "crossover" in a change sequence to master data in server 12.

Server 12 may address the foregoing situations by implementing each change in the order that is specified by the change's metadata. In this case, server 12 updates (84) the data change-by-change, and delays (86) posting later changes until all earlier changes in the staging area are implemented. Server 12 thus may wait to post (87) the totality of changes from client 21. In some implementations, server 12 may initiate a concurrency resolution process to resolve any conflicts between the version "C"(Client 21) master data from client 21 and the version "B"(Client 21) master data from client 21 before updating the server master data (version "A"(Server 12)). The concurrency resolution process may be configured to identify, and to resolve, any inconsistencies between versions "B"(Client 21) and "C"(Client 21). Any type of concurrency resolution process may be used, including interactive and non-interactive processes.

Referring back to block 82, if the pending flag is not on, server 12 simply incorporates (89) the data updates into the server master data and posts (87) the resulting updated data. As before, the posted data may be propagated to, or accessed by, the remaining clients of server 12.

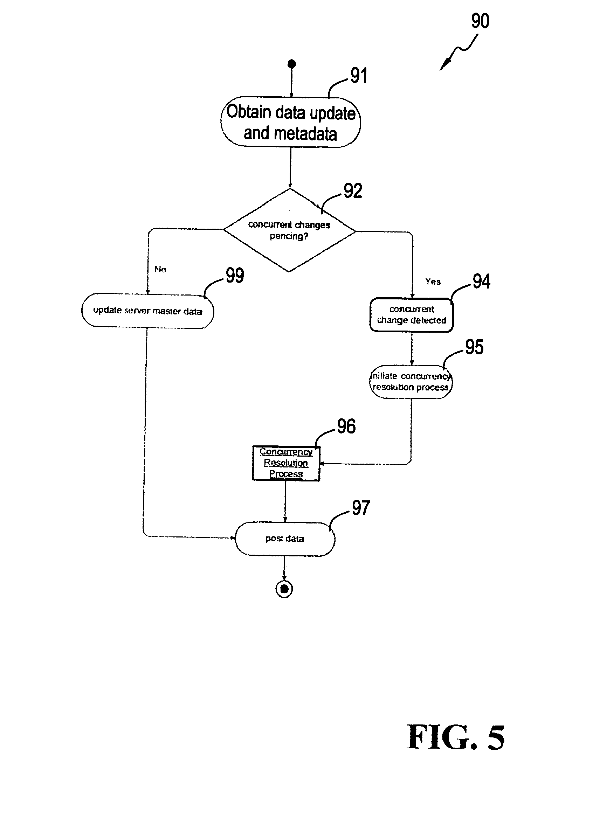

Fig. 5 shows a process 90, which may be implemented by computer program 26, that detects concurrent changes initiated by server 12 and a client, such as client 21. The same process may be applied to detect successive changes attempted by server 12.

In process 90, a data update is made directly via central server 12. For example, the data update may be made by an administrator of central server 12. Along with the data update, central server 12 assigns metadata. As explained above, the metadata is associated with the data update and contains one or more identifiers for the data update. For example, the metadata may define a token that identifies the data update as version "B"(Server 12) and the original master data as version "A"(Server 12), where, as above, the parentheticals identify the source of the version and also the data to be changed. As above, the tokens may be any type of identifier, such as a time-stamp, a version identifier, or a global unique identifier (GUID).

Server 12 obtains/determines (91) the data update and metadata. Server 12 determines (92) whether there are any concurrent changes pending in staging area 27 for the server master data that is on server 12. More specifically, when server 12 receives a data update and associated metadata, server 12 stores the data update and associated metadata in staging area 27. If a change to the server master data is pending, e.g., from a previous change made by server 12 or a client, server 12 compares the metadata for the data update with the metadata for a pending data update. If the metadata indicates that the two data updates are different, server 12 detects (94) a concurrent change to the server master data.

For example, server may have stored, in staging area 27, a data update from client 21 along with metadata identifying the data update as a version "C"(Client 21) of original master data version "A"(Server 12). With the server data update and the client data update being based on the same version "A"(Server 12), but leading to different versions "B" (Client 21) and "C"(Server 12), server 12 is able to ascertain that there is a concurrent change being made to the server master data. The concurrent changes, in this case, is made by client 21 and server 12.

When a concurrent change is detected, server 12 initiates (95) a concurrency resolution process to resolve any conflicts between different versions of the data. Any type of concurrency resolution process may be used, including interactive and non-interactive processes. In one implementation, the concurrency resolution process consolidates the changes to be made to the server master data and makes the consolidated changes to the server master data. Server 12 posts (97) the resulting updated data. The posted data may thereafter be propagated to, or accessed by, the remaining clients of server 12.

Referring back to block 92, if there are no pending changes, server 12 need not initiate the concurrency resolution process. Instead, server 12 simply incorporates (99) the data updates into the server master data and posts (97) the resulting updated data. As before, the posted data may be propagated to, or accessed by, the remaining clients.

Processes 40, 60, 75 and 90, or portions thereof, may be combined to form a single process for detecting data changes. For example, actions 49, 67, 82 and 92 may be performed concurrently or successively in a single change detection process, or portions thereof may be combined in a single change detection process.

Process 40, 60, 75 and 90, and any modifications thereto described above (referred to collectively as "the processes"), are not limited to use with the hardware and software described above; they may find applicability in any computing or processing environment and with any type of machine that is capable of running machine-readable instructions. The processes can be implemented in digital electronic circuitry, computer hardware, firmware, software, or combinations thereof.

The processes can be implemented via a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Actions associated with the processes can be performed by one or more programmable processors executing one or more computer programs to perform the functions of the processes. The actions can also be performed by, and the processes can be implemented as, special purpose logic circuitry, e.g., an FPGA (field programmable gate array) and/or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer include a processor for executing instructions and one or more memory devices for storing instructions and data. Generally, a computer will also include, or be operatively coupled to receive data from, or transfer data to, or both, one or more mass storage devices for storing data, e.g., magnetic, magneto-optical disks, or optical disks. Information carriers suitable for embodying computer program instructions and data include all forms of non-volatile memory, including by way of example, semiconductor memory devices, e.g., EPROM, EEPROM, and flash memory devices; magnetic disks, e.g., internal hard disks or removable disks; magneto-optical disks; and CD-ROM and DVD-ROM disks.

The processes can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the processes, or any combination of such back-end, middleware, or front-end components. The components of the system can be interconnected by any form or medium of digital data communication, e.g., a communication network. Examples of communication networks include a LAN and a WAN, e.g., the Internet.

Activities associated with the processes can be rearranged and/or one or more such activities can be omitted to achieve the same results described herein. All or part of the processes may be fully automated, meaning that they operate without user intervention, or interactive, meaning that all or part of the processes may include some user intervention.

Elements of different embodiments described herein may be combined to form other embodiments not specifically set forth above. Other embodiments not specifically described herein are also within the scope of the following claims.

## Claims

1. A method of detecting concurrent changes in data, the method comprising:
- storing a first version of data and first metadata corresponding thereto;
- receiving a second version of data and second metadata corresponding thereto; and
- determining whether the first version is the same as the second version of data using the first and second metadata;
- wherein, if the first version of data is not the same as the second version, the method further comprises:
- initiating a concurrency resolution process to resolve inconsistencies in data between the first version and the second version, the concurrency resolution process producing consolidated changes based on the first version and the second version.

2. The method of claim 1, further comprising:
incorporating the consolidated changes into master data; and posting the master data with the consolidated changes.

3. The method of claim 2, wherein the first version of data and the first metadata comprise a pending change to the master data.

4. The method of claim 3, further comprising:
receiving the first version of data and the first metadata before receiving the second version of data and the second metadata, the first version of data and the first metadata being received from a first source and the second version of data and the second metadata being received from a second source, the first source being different from the second source.

5. The method of claim 4, further comprising:
storing the second version of data and the second metadata in a staging area; and
storing the first version of data and the first metadata in the staging area.

6. The method of claim 1, wherein at least one of the first metadata and the second metadata comprises a global unique identifier or a time-stamp.

7. The method of claim 1, wherein the first version of data and the first metadata are received from a first source and the second version of data and the second metadata are received from a second source, the first source being different from the second source.

8. The method of claim 1, wherein the first version of data and the first metadata are received from a first source and the second version of data and the second metadata are received from a second source, the first source being same as the second source.

9. The method of claim 1, wherein the first version of data and the first metadata are received via a first source and the second version of data and the second metadata are received via a second source, the first source comprising a client and the second source comprising a server on which the method is performed.

10. The method of claim 1, wherein the first metadata and the second metadata identify an original version of the data upon which both first version and the second version are based.

11. The method of claim 1, wherein at least one of the first and second metadata identifies data to be changed, a version of the data upon which a change is based, and a version of the data that the change produces.

12. The method of claim 11, wherein the first metadata identifies data to be changed by a client, a version of the data on the client upon which a change is based, and a version of the data on the client that the change produces; and wherein the second metadata identifies data to be changed by a server, a version of the data on the server upon which a change is based, and a version of the data on the server that the change produces.

13. A computer program product comprising one or more machine-readable media that store instructions which, when executed, cause one or more machines to detect concurrent changes in data, the instructions causing the one or more machines to:
- store a first version of data and first metadata corresponding thereto;
- receive a second version of data and second metadata corresponding thereto; and
- determine whether the first version of data is the same as the second version of data using the first and second metadata;
- wherein, if the first version is not the same as the second version, the instructions cause the one or more machines to:
- initiate a concurrency resolution process to resolve inconsistencies in data between the first version and the second version, the concurrency resolution process producing consolidated changes based on the first version and the second version.
